# EUROPÄISCHE PATENTSCHRIFT

(11) **EP 2 180 011 B1**
(45) Veröffentlichungstag und Bekanntmachung des Hinweises auf die Patenterteilung: **23.11.2011**
(21) Anmeldenummer: 09012788.7
(22) Anmeldetag: 09.10.2009
(51) Int. Cl.: C08G 18/72

(54) **Feuchtigkeitshärtende Polyisocyanatmischungen**
Moisture-setting polyisocyanate mixtures
Mélanges de polyisocyanate durcissables par l'humidité

(30) Priorität: 22.10.2008 DE 102008052765
(43) Veröffentlichungstag der Anmeldung: 28.04.2010
(73) Patentinhaber: Bayer MaterialScience AG, 51368 Leverkusen (DE)
(72) Erfinder: Wamprecht, Christian, Dr., 41472 Neuss (DE); Zuazo Osaca, Iker, Dr., Pudong 200127 Shanghai (CN)

(56) Entgegenhaltungen:
- EP-A- 0 295 568
- EP-A- 1 582 543

## Beschreibung

Die Erfindung betrifft feuchtigkeitshärtende Polyisocyanatmischungen, ein Verfahren zu ihrer Herstellung und ihre Verwendung als Bindemittel in Lacken, Beschichtungen, Kleb- und Dichtstoffen.

Feuchtigkeitshärtende Prepolymere als Bestandteil einkomponentiger Lacke sind seit langem bekannt (z. B. H. Kittel, Lehrbuch der Lacke und Beschichtungen, 2, S. Hirzel Verlag Stuttgart, Leipzig, 1998). Diese Systeme bestehen aus Polyurethan Prepolymeren mit freien, endständigen Isocyanatgruppen (NCO-Gruppen). Nach Applikation findet unter dem Einfluss von Luftfeuchtigkeit eine Vernetzung unter Bildung von Harnstoff gruppen statt.

Für eine schnelle Trocknung sind Prepolymere auf Basis aromatischer Isocyanate, insbesondere 2,4- und gegebenenfalls 2,6-Diisocyanatotoluol (TDI), besonders gut geeignet. Dabei stellen besonders die Isocyanuratgruppen aufweisenden Polyisocyanate auf Basis der genannten TDI-Typen wertvolle Komponenten für die Herstellung schnelltrocknender Polyurethanbeschichtungen für den Holz- und Möbelbereich dar. Dabei wird die schnelle Trocknung durch den hohen Verzweigungsgrad dieser Produkte hervorgerufen. Dies führt zu einem schnellen Anstieg der Glasübergangstemperatur während der Vernetzungsreaktion unter Bildung von Harnstoffgruppen.

Bedingt durch den hohen Verzweigungsgrad sind solche schnell trocknenden Systeme jedoch oft spröde und Filme aus solchen Lacken weisen nicht die geforderte Elastizität auf. Vor allem bei starken Temperaturwechseln können so Risse im Lack entstehen. Dies gilt insbesondere für Beschichtungen auf starken Volumenschwankungen unterliegenden Substraten, wie z. B. Holz.

Für die Flexibilisierung solcher TDI-Trimerisate sind z. B. hochmolekulare Polyether zum Aufbau des Prepolymeren geeignet. Durch die Flexibilisierung werden die Polymere in der Regel derart weich, dass die Trocknungsgeschwindigkeit deutlich abnimmt. In der Praxis bedeutet dies, dass solche feuchtigkeitshärtenden Beschichtungen auf Basis von Polyurethan-Prepolymeren deutlich langsamer trocknen als z. B. die weit verbreiteten Nitrocellulose Kombilacke (NC-Lacke). Die Verträglichkeit von langkettigen Polyethem mit TDI-Isocyanuraten ist begrenzt, was mitunter bereits bei kleinen Mengen Polyether schon zu trüben oder nicht lagerstabilen Produkten führt. Eine Lösung der bisher geschilderten Probleme stellt die Lehre der EP-A 1 582 543 dar. Dort wurde gefunden, dass elastische und zugleich schnell trocknende feuchtigkeitshärtende Lacke formuliert werden können, wenn als Isocyanatkomponente eine lösemittelhaltige Zubereitung, enthaltend NCO-gruppenhaltige Prepolymere basierend auf TDI-Trimerisaten und Diphenylmethandiisocyanat, eingesetzt wird, wobei wenigstens eines der Prepolymere unter Verwendung eines Ethylenoxidblock-haltigen Polyetherdiols mit einem zahlenmittleren Molekulargewicht von 3000 bis 4500 g/mol und einem Ethylenoxidgehalt von 2 bis 18 Gew.-%, bezogen auf alle enthaltenden Alkylenoxideinheiten des Diols, hergestellt wurde.

Nachteilig bei den Beschichtungssystemen auf Basis der EP-A 1 582 543 erweist sich der relativ geringe Feststoffgehalt von 30 bis 35 Gew.-% der daraus formulierten Lacke, sowie insbesondere die schlechte Licht- und Witterungsbeständigkeit, die sich durch eine starke Vergilbungsneigung negativ bemerkbar macht.

Aufgabe der vorliegenden Erfindung war dementsprechend die Bereitstellung von Polyisocyanatmischungen, die die Herstellung von Lacken und Beschichtungen erlauben, welche im Vergleich zu NC-Lacken vergleichbare Trocknungsgeschwindigkeiten haben, das geforderte Elastizitätsniveau und eine hohe Beständigkeit gegenüber Lösemitteln und Chemikalien aufweisen und die die oben geschilderten Nachteile des Standes der Technik nicht zeigen.

Insbesondere sollten Lacke auf Basis der neuen Produkte einen Festkörpergehalt von > 50 Gew.-% aufweisen und eine gleich schnelle Trocknung besitzen. Die Vergilbungsneigung der Beschichtungen sollte im Vergleich zum Stand der Technik deutlich verbessert sein.

Es wurde nun gefunden, dass Polyisocyanatmischungen auf Basis von Prepolymeren, basierend auf TDI-Isocyanuraten und speziellen stickstoffhaltigen Polyethern, und aliphatischen Polyisocyanaten zu feuchtigkeitshärtenden Lacken formuliert werden können, die einen relativ hohen Festkörpergehalt von > 50 Gew.-% aufweisen und die zu schnell trocknenden, elastischen Beschichtungen mit zugleich hoher Härte, sehr guter Lösemittel- und Chemikalienbeständigkeit sowie guter Vergilbungsresistenz bei Lichteinwirkung verarbeitet werden können.

Gegenstand der Erfindung sind daher lösemittelhaltige Polyisocyanatmischungen mit einem Lösemittelanteil von < 50 Gew.-% bei einer Auslaufviskosität von 20 s (DIN 4 mm Becher, 23 °C), einem NCO-Gehalt von 7 bis 15 Gew.-%, einem Gehalt an monomerem TDI von weniger 0,2 Gew.-%, einem Gehalt an monomeren aliphatischen und oder cycloaliphatischen Isocyanaten, wie z. B. Hexamethylendiisocyanat (HDI), Isophorondiisocyanat (IPDI) und 4,4'-Diisocyanatodicyclohexylmethan von weniger als 0,2 Gew.-%, dadurch gekennzeichnet, dass sie bestehen aus:
A) Einer TDI-Komponente, enthaltend TDI-Isocyanuratpolyisocyanate und
B) Einer aliphatischen und/oder cycloaliphatischen Isocyanatkomponente, enthaltend aliphatische und/oder cycloaliphatischen Polyisocyanate,
   und Umsetzungsprodukte wenigstens einer der Komponenten A) und B) mit
C) mindestens einem Polyetherpolyol mit einem zahlengemittelten Molekulargewicht von 500 bis 4000 g/mol, das mindestens 1 tertiäres Stickstoffatom enthält und
D) gegebenenfalls mindestens einem Polyetherpolyol, das keine Stickstoffatome enthält.

Ferner ist Gegenstand der Erfindung ein Verfahren zur Herstellung der lösemittelhaltigen Polyisocyanatmischungen, bei dem in Anwesenheit organischer Lösemittel NCO-gruppenhaltige Prepolymere aus
A) einer TDI-Komponente, enthaltend TDI-Isocyanuratpolyisocyanate und
B) einer aliphatisch und/oder cycloaliphatischen Isocyanatkomponente, enthaltend ali-phatische und/oder cycloaliphatische Polyisocyanate
   durch Umsetzung wenigstens einer der beiden Komponenten mit
C) mindestens einem Polyetherpolyol mit einem zahlengemittelten Molekulargewicht von 500 bis 4000 g/mol, das mindestens 1 tertiäres Stickstoffatom enthält, und
D) gegebenenfalls mindestens einem Polyetherpolyol, das keine Stickstoffatome enthält,
   hergestellt werden.

Als TDI-Isocyanuratpolyisocyanate A) werden bei der Herstellung der erfindungsgemäßen Polyisocyanatmischungen typischerweise Isocyanurate aus TDI-Isomerenmischungen von 2,4-TDI und 2,6-TDI mit Anteilen von bevorzugt 80 bis 100 Gew.-% des 2,4- und 0 bis 20 Gew.-% des 2,6-Isomeren und ganz besonders bevorzugt 80 Gew.-% des 2,4- und 20 Gew.-% des 2,6-Isomeren eingesetzt, wobei diese Prozentangaben auf das lösemittelfreie Polyisocyanatharz bezogen sind.

Isocyanurat-Polyisocyanate aus TDI sind durch katalytische Trimerisation der entsprechenden Toluylendiisocyanate nach bekannten Methoden erhältlich. Diese werden beispielsweise in DE-A 195 23 657 und DE-A 392 85 03 beschrieben.

Bevorzugt werden bei der Herstellung der erfindungsgemäßen Polyisocyanatmischungen die TDI-Isocyanuratpolyisocyanate in A) als organische Lösung mit einem NCO-Gehalt von 7 bis 8,5 Gew.-%, einem Gehalt an TDI-Restmonomeren von < 0,5 Gew.-% und einem Festkörpergehalt von 30 bis 70 Gew.-% eingesetzt. Als organische Lösungsmittel können Ester, wie z. B. Ethylacetat, Butylacetat, Methoxypropylacetat, Methylglykolacetat, Ethylglykolacetat, Diethylenglykolmonomethyletheracetat; Ketone, wie z. B. Methylethylketon, Methylisobutylketon, Methylamylketon; Aromaten, wie z. B. Toluol und Xylol sowie die in der Lackchemie üblichen höhersiedenden Kohlenwasserstoffgemische verwendet werden. Bevorzugt ist die Verwendung von Estern, besonders bevorzugt ist Butylacetat.

Als aliphatische und/oder cycloaliphatische Polyisocyanatkomponente B) werden bei der Herstellung der erfindungsgemäßen Polyisocyanatmischungen typischerweise die an sich bekannten Lackpolyisocyanate mit Urethan-, Uretdion-, Allophanat-, Biuret-, Iminooxadiazindion- und/oder Isocyanuratgruppen eingesetzt.

Als bevorzugte Vertreter der Komponente B) kommen die an sich in der Lackchemie bekannten Urethan-, Uretdion-, Allophanat-, Biuret-, Iminooxadiazindion- und/oder Isocyanuratgruppen-haltigen Polyisocyanate in Betracht, die durch dem Fachmann bekannte Modifizierungen monomerer aliphatischer, cycloaliphatischer, und/oder araliphatischer Diisocyanate zugänglich sind. Als Diisocyanate sind beispielhaft zu nennen 1,6-Diisocyanatohexan, 1-Isocyanato-3,3,5-trimethyl-5-isocyanatomethylcyclohexan (Isophorondiisocyanat), 4,4'-Diisocyanatodicyclohexylmethan, 1,4-Diisocyanatocyclohexan, 1-Methyl-2,4-diisocyanatocyclohexan, 1-Methyl-2,6-diisocyanatocyclohexan, 4-Isocyanatomethyl-1,8-octandiisocyanat sowie deren Gemische.

Die Herstellung dieser Lackpolyisocyanate, ausgehend von monomeren Diisocyanaten, ist dem Fachmann geläufig und wird auf den nächsten Seiten unter Angabe von relevanten Literaturstellen beschrieben. Es ist dabei unerheblich, ob die eingesetzten Diisocyanate nach Phosgen- oder phosgenfreien Verfahren hergestellt wurden.

Die Lackpolyisocyanate der vorstehend genannten Art weisen bevorzugt einen Gehalt an NCO-Gruppen von 5 bis 25 Gew.-%, eine mittlere NCO-Funktionalität von 2,0 bis 5,0, vorzugsweise 2,8 bis 4,0, und einen Restgehalt an, zu ihrer Herstellung eingesetzten, monomeren Diisocyanaten von unter 1 Gew.-%, vorzugsweise unter 0,5 Gew.-% auf.

Bevorzugte Lackpolyisocyanate der vorstehend genannten Art sind diejenigen mit aliphatisch und/oder cycloaliphatisch gebundenen, freien Isocyanatgruppen.

Urethangruppen aufweisende Lackpolyisocyanate sind beispielsweise die Umsetzungsprodukte von 1-Methyl-2,4- und gegebenenfalls 1-Methyl-2,6-diisocyanatocyclohexan mit unterschüssigen Mengen an Trimethylolpropan oder dessen Gemischen mit einfachen Diolen, wie z. B. den isomeren Propan- oder Butandiolen. Die Herstellung derartiger, Urethangruppen aufweisender, Lackpolyisocyanate in nahezu monomenfreier Form ist beispielsweise in der DE-A 1 090 196 beschrieben.

Besonders bevorzugte Lackpolyisocyanate sind diejenigen der vorstehend genannten Art mit Biuret-, Uretdion-, Isocyanurat- und/oder Iminooxadiazindionstrukturen.

Biuretgruppen aufweisende Lackpolyisocyanate und deren Herstellung sind beispielsweise in EP-A 0 003 505, DE-A 110 139 4, US-A 3 358 010 oder US-A 3 903 127 beschrieben.

Uretdion- und Isocyanuratgruppengruppen aufweisende Lackpolyisocyanate und deren Herstellung sind beispielweise in EP-A 0 377 177 beschrieben.

Zu den Isocyanuratgruppen aufweisenden Lackpolyisocyanaten gehören die Trimerisate oder Mischtrimerisate der oben beispielhaft genannten Diisocyanate, wie z. B. die aliphatischen, aliphatisch/cycloaliphatischen und/oder cycloaliphatischen Trimerisate oder Mischtrimerisate auf Basis von 1,6-Diisocyanatohexan und/oder Isophorondiisocyanat, die beispielsweise gemäß US-B 4 324 879, US-B 4 288 586, DE-A 310 026 2, DE-A 310 026 3, DE-A 303 386 0 oder DE-A 314 467 2 erhältlich sind. Iminooxadiazindiongruppen aufweisende Lackpolyisocyanate und deren Herstellung sind beispielsweise in EP-A 798 299, EP-A 896 009, EP-A 962 454 und EP-A 962 455 zu finden.

Die Polyetherpolyole der Komponenten C) und D) sind durch die in der Polyurethanchemie an sich bekannten Technologien, z. B. der basenkatalysierten Alkoxylierung geeigneter Startermoleküle mittels Ethylen- und/oder Propylenoxid zugänglich. Die hierzu gebräuchlichen Methoden sind dem Fachmann bekannt und beispielsweise in der EP-A 761 708 oder der WO 97/40086 beschrieben.

Geeignete Startermoleküle zur Herstellung der Polyetherkompoente C) sind aminogruppenhaltige Moleküle, wie z. B. 2-Aminoethanol, 2-(Methylamino)-ethanol, Diethanolamin, Triethanolamin, 3-Amino-1-propanol, Diisopropanolamin, 2-Amino-2-hydroxymethyl-1,3-propandiol, Ethylendiamin, 1,2-Diaminopropan, 1,3-Diaminopropan, 1,4-Diaminobutan, 1,6-Diaminohexan, 1,12-Diaminododecan oder deren Mischungen. Geeignete Startermoleküle zur Herstellung der Polyetherkomponente D) sind typischerweise mehrwertige Alkohole, wie z. B. Ethylenglykol, Propandiol-1,2 und -1,3, Butandiol-1,2, -1,3, 1,4 und -2,3, Pentandiol-1,5, Hexandiol-1,6, Octandiol-1,8, 2-Methylpropandiol-1,3, 2,2-Dimethylpropandiol-1,3, 2-Ethyl-2-butyl-propandiol-1,3, 2,2,4-Trimethylpentandiol-1,3, 2-Ethylhexandiol-1,3, höhermolekulare α,ω-Alkandiole mit 9 bis 18 Kohlenstoffatomen, Cyclohexandimethanol, Cyclohexandiole, Glycerin, Trimethylolpropan, Butantriol-1,2,4, Hexantriol-1,2,6, Bis(trimethylolpropan), Pentaerythrit, Sorbit, oder deren Mischungen.

Bevorzugt werden bei C) und D) Starter der vorstehend genannten Art eingesetzt, wobei die Funktionalitäten vorzugsweise 2-4 betragen.

Es ist auch möglich, Startergemische aus aminogruppenhaltigen und aminogruppenfreien Startern einzusetzen, um dann Gemische der Polyetherkomponenten C) und D) zu erhalten.

Besonders bevorzugt kommen als Komponente C) Polyether auf Basis von Triethanolamin und/oder Diaminoethan zum Einsatz, wobei die dabei entstehenden aminogruppenhaltigen Polyether ein Molekulargewicht von 500 bis 6000, vorzugsweise 1000 bis 4500 aufweisen.

Besonders bevorzugt kommen als Komponente D) Polyether auf Basis von Ethylenglykol und/oder 1,2-Propandiol zum Einsatz, wobei die dabei entstehenden aminogruppenfreien Polyether ein Molekulargewicht von 500 bis 18000, vorzugsweise 1000 bis 12000 und besonders bevorzugt 1500 bis 8000 aufweisen.

Der Anteil an aminogruppenhaltigen Polyethern beträgt, bezogen auf die Summe aller eingesetzten Polyether, 5 bis 60 Gew.-%, vorzugsweise 10 bis 50 Gew.-%

Zum Aufbau der Polyether kommen bevorzugt Ethylenoxid und/oder Propylenoxid zum Einsatz. Die Herstellung der eingesetzten Polyether kann sowohl basenkatalysiert als auch mittels DMC-Katalyse erfolgen, wobei die DMC-Katalyse auf aminogruppenfreie Polyether beschränkt bleibt.

Die erfindungsgemäßen Polyisocyanatmischungen werden bevorzugt nach einem Zweistufenverfahren hergestellt. Dazu werden die Polyisocyanate A) vorgelegt und mit den Polyolkomponenten C) und gegebenenfalls D) umgesetzt. Anschließend wird die Polyisocyanatkomponente B) zugegeben und mit dem entstandenen Umsetzungsprodukt aus A) und C) und gegebenenfalls D) gemischt.

In einer besonderen Ausführungsform ist auch die Herstellung der erfindungsgemäßen Polyisocyanatmischungen nach einem Einstufenverfahren möglich. Dabei werden die Polyisocyanatkomponenten A) und B) vorgelegt, anschließend werden die Polyolkomponente C) und gegebenenfalls D) zugegeben und mit der Polyisocyanatmischung aus A) und B) zur Reaktion gebracht.

In einer weiteren besonderen Ausführungsform wird wiederum nach einem Zweistufenverfahren gearbeitete. Dazu wird die Polyisocyanatkomponente B) vorgelegt und mit den Polyolkomponenten C) und gegebenenfalls D) umgesetzt. Anschließend wird die Polyisocyanatkomponente A) zugegeben und mit dem entstandenen Umsetzungsprodukt aus B) und C) und gegebenenfalls D) gemischt.

Die Mengen der für die Umsetzung von A) mit C) und gegebenenfalls D) eingesetzten Verbindungen betragen bevorzugt 55 bis 95% A) und 5 bis 45% C) und D), besonders bevorzugt 60 bis 90% A) und 10 bis 40% C) und D) und ganz besonders bevorzugt 65 bis 85% A) und 15 bis 35% C) und D), bezogen auf die lösemittelfreien Komponenten.

Die Mengen der in B) und [A) + C) + D)] eingesetzten Verbindungen betragen bevorzugt 35 bis 75% B) und 25 bis 65% [A) + C + D)], besonders bevorzugt 40 bis 70% B) und 30 bis 60% [A) + C) + D)] und ganz besonders bevorzugt 45 bis 65% B) und 35 bis 55% [A) + C) + D)], bezogen auf die lösemittelfreien Komponenten.

Das Verhältnis der NCO-Gruppen der in A) und B) eingesetzten Verbindungen zu den isocyanatreaktiven Funktionen der in C) und D) eingesetzten Polyetherpolyole beträgt bevorzugt 20 : 1 bis 55 : 1, besonders bevorzugt 25 : 1 bis 50 : 1 und ganz besonders bevorzugt 30 : 1 bis 45 : 1.

Üblicherweise findet die Herstellung der erfindungsgemäßen Polyisocyanatmischung bei Temperaturen von 20 bis 160 °C, vorzugsweise 30 bis 140 °C und besonders bevorzugt 40 bis 120 °C statt für die Umsetzung der Polyetherkomponente C) und gegebenenfalls D) mit den Polyisocyanatkomponenten A) und gegebenenfalls B). Dabei können auch Stabilisatoren, wie z. b. organische Säuren oder Säurechloride mit verwendet werden.

Zur Beschleunigung der Urethanisierung können die an sich bekannten Katalysatoren, wie z. B. Organometallverbindungen (z. B. Bleioctoat, Zinnoctoat, Dibutylzinndilaurat) oder Amine (z. B. tertiäre Amine) verwendet werden. Falls Katalysatoren mit verwendet werden, kommen diese vorzugsweise in Mengen von 0,001 bis 5 Gew.-%, insbesondere 0,002 bis 2 Gew.-%, bezogen auf das Gesamtgewicht der jeweiligen Reaktionspartner, zum Einsatz.

Die Festkörpergehalte der erfindungsgemäßen Polyisocyanatmischungen betragen bei einer Auslaufviskosität von 20 s (DIN 4 mm Becher, 23 °C) > 50 bis 75 Gew.-%, besonders bevorzugt > 50 bis 70 Gew.-%, wobei der Festgehalt durch Zugabe von inerten Lösemitteln der vorstehend genannten Art eingestellt werden kann. Die Isocyanatgehalte der erfindungsgemäßen Polyisocyanatmischungen betragen 7 bis 15 Gew.-%, vorzugsweise 8 bis 15 Gew.-% und besonders bevorzugt 9 bis 14 Gew.-%.

Die erfindungsgemäßen Polyisocyanatmischungen können zur Herstellung schnell trocknender, feuchtigkeitshärtender Polyurethanbeschichtungen, beispielsweise für Hölzer, eingesetzt werden, wobei diese Beschichtungen auch bei tiefen Temperaturen von -20 °C keine Tendenz zur Rissbildung zeigen. Weiterhin eignen sich die erfindungsgemäßen Polyisocyanatmischungen auch zu Herstellung von feuchtigkeitshärtenden Klebund Dichtstoffen. Bevorzugt ist jedoch die Verwendung als Rohstoffe für Lacke und Beschichtungen

Ein weiterer Gegenstand der Erfindung sind daher feuchtigkeitshärtende Beschichtungen, Kleb- und Dichtstoffe, enthaltend
a) die erfindungsgemäßen Polyisocyanatmischungen
b) Katalysatoren zur Beschleunigung der Reaktion der freien NCO-Gruppen mit Feuchtigkeit sowie
c) gegebenenfalls Hilfs- und Zusatzstoffe

Als Katalysatoren b) zur Beschleunigung der NCO/Wasser-Reaktion können beispielsweise tertiäre Amine, wie z. B. Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin, Dimorpholinodiethylether oder Metallsalze, wie z. B. Eisen(III)-chlorid, Zinkchlorid, Zink-2-ethylcaproat, Zinn(II)-octoat, Zinn(II)-palmitat, Dibutylzinn(IV)-dilaurat und Molybdänglykolat oder beliebige Gemische solcher Katalysatoren verwendet werden. Ganz besonders bevorzugt ist die Verwendung von Dimorpholinodiethylether.

Die Komponente b) wird in Mengen von 0,001 bis 5 Gew.-%, bevorzugt 0,01 bis 3 Gew.-%, besonders bevorzugt 0,05 bis 2,5 Gew.-%, und ganz besonders vevorzugt 0,1 bis 2,0 Gew.-% bezogen auf die Menge der Komponente a) (fest auf fest) eingesetzt.

Gegebenenfalls in Komponente c) enthaltende Hilfs- und Zusatzstoffe können z. B. oberflächenaktive Substanzen, Schleifwachse, interne Trennmittel, Füllstoffe, Farbstoffe, Pigmente, Flammschutzmittel, Hydrolyseschutzmittel, Mikrobiozide, Verlaufsmittel, Antioxidantien wie 2,6-Di-tert.-butyl-4-methylphenol, UV-Absorber vom Typ 2-Hydroxyphenylbenzotriazol oder Lichtschutzmittel vom Typ der am Stickstoffatom substituierten oder unsubstituierten HALS-Verbindungen wie Tinuvin^{®}292 und Tinuvin^{®}770DF (Ciba Spezialitäten GmbH, Lampertheim, DE) oder andere handelsübliche Stabilisierungsmittel und Additive, wie sie beispielsweise in "Lackadditive" (Johan Bieleman, Verlag Wiley-VHC Weinheim, New York, Chichester, Brisbane, Singapore, Toronto, 1998, S. 273 - 370) beschrieben sind, oder beliebige Gemische dieser Verbindungen.

Ebenfalls möglich ist hier auch der Zusatz von bereits zuvor genannten inerten Lösungsmitteln zur Viskositätseinstellung.

Ebenfalls möglich, jedoch nicht bevorzugt, ist die Verwendung von weiteren NCOfunktionellen Prepolymeren neben den erfindungsgemäßen Polyisocyanatmischungen a).

Bei der Herstellung der erfindungsgemäßen Beschichtungsmittel werden die Einzelkomponenten a) - c) in beliebiger Reihenfolge miteinander vermischt.

Beschichtungsmittel basierend auf den erfindungsgemäßen Polyisocyanatmischungen können nach an sich bekannten Methoden, wie beispielsweise durch Spritzen, Streichen, Fluten, Gießen oder mit Hilfe von Walzen oder Rakeln auf beliebige Substrate aufgetragen werden. Als Substrate eignen sich beispielsweise Metall, Holz, Glas, Stein, keramische Materialien, Beton, harte und flexible Kunststoffe, Textilien, Leder und Papier. Bevorzugt ist Holz.

Die Aushärtung kann bei Temperaturen > 5 °C erfolgen, vorzugsweise bei Raumtemperatur oder erhöhter Temperatur.

### Beispiele:

Soweit nicht abweichend anders angegeben, beziehen sich alle Prozentangaben auf Gewichtsprozent.

Die Ermittlung des NCO-Gehaltes der in den Beispielen und Vergleichsbeispielen beschriebenen Harze erfolgt durch Titration gemäß DIN 53185.

Die dynamischen Viskositäten wurden bei 23 °C mit einem Rotationsviskosimeter (MCR 51, Anton Paar GmbH, D-73760 Ostfildern) bestimmt.

Die Hazen-Farbzahl wurde mit einem Farbzahlmessgerät (LICO 400, Dr. Bruno Lange GmbH, D-40549 Düsseldorf) bestimmt.

Der Restmonomerengehalt wurde mittels GC nach DIN 55956 bestimmt.

Die Lacke wurden bei Raumtemperatur unter Einfluss von Luftfeuchtigkeit gehärtet. Die relative Luftfeuchtigkeit lag im Bereich von 30 bis 50 %. Als 100 % Luftfeuchtigkeit wird die maximale Menge Feuchtigkeit verstanden, die die Luft bei entsprechender Temperatur aufnehmen kann, ohne dass Wasserdampf entsteht.

Desmodur^{®} IL 1451: TDI-basiertes, isocyanuratgruppenhaltiges Polyisocyanat, 51 Gew.-%-ig in Butylacetat mit einem Isocyanatgehalt von 7,4 Gew.-% (Handelsprodukt der Bayer MaterialScience AG, Leverkusen, DE).

Desmodur^{®} N 3600: Polyisocyanat auf Basis von Hexamethylendiisocyanat mit einem Isocyanatgehalt von 23,0 Gew.-% (Handelsprodukt der Bayer MaterialScience AG, Leverkusen, DE).

Desmodur^{®} N 3400: Polyisocyanat auf Basis von Hexamethylendiisocyanat mit einem Isocyanatgehalt von 21,8 Gew.-% (Handelsprodukt der Bayer MaterialScience AG, Leverkusen, DE).

Desmodur^{®} XP 2580: Polyisocyanat auf Basis von Hexamethylendiisocyanat mit einem Isocyanatgehalt von 20,0 Gew.-% (Versuchsprodukt der Bayer MaterialScience AG, Leverkusen, DE).

Desmodur^{®} XP 2410: Polyisocyanat auf Basis von Hexamethylendiisocyanat mit einem Isocyanatgehalt von 23,5 Gew.-% (Versuchsprodukt der Bayer MaterialScience AG, Leverkusen, DE).

### Ausgangspolyisocyanate

### Polyisocyanat A1:

Zu einer Mischung aus 1003 g Desmodur^{®} IL 1451, 119 g Butylacetat und 0,65 g 2-Chlor-propionsäure wurde ein Gemisch aus 18 g eines Triethanolamin gestarteten Polyethertriols mit einem zahlenmittleren Molekulargewicht Mn von 1161 g/mol und einem Propylenoxidgehalt von 86,9 Gew.-% und 160 g eines Propylenglykol gestarteten Polyethers mit einem zahlenmittleren Molekulargewicht von Mn von 4007 g/mol, einem Propylenoxidgehalt von 85,2 Gew.-% und einem Ethylenoxidgehalt von 13,1 Gew.-% bei 80 °C zugetropft. Nach beendeter Zugabe wurde bei 80 °C weitergerührt, bis der theoretische NCO-Gehalt von 5,3 Gew.-% erreicht war. Die resultierende, klare Prepolymerlösung hatte einen Festgehalt von 53,1 Gew.-%, eine Viskosität bei 23 °C von 682 mPas, einen NCO-Gehalt von 5,2 Gew.-% und eine Farbzahl von 58 APHA.

### Polyisocyanat A2:

Zu einer Mischung aus 1180 g Desmodur^{®} IL 1451, 127 g Butylacetat und 0,75 g 2-Chlor-propionsäure wurde ein Gemisch aus 29 g eines Triethanolamin gestarteten Polyethertriols mit einem zahlenmittleren Molekulargewicht Mn von 1161 g/mol und einem Propylenoxidgehalt von 86,9 Gew.-% und 164 g eines Propylenglykol gestarteten Polyethers mit einem zahlenmittleren Molekulargewicht von Mn von 4007 g/mol, einem Propylenoxidgehalt von 85,2 Gew.-% und einem Ethylenoxidgehalt von 13,1 Gew.-% bei 80 °C zugetropft. Nach beendeter Zugabe wurde bei 80 °C weitergerührt, bis der theoretische NCO-Gehalt von 5,3 Gew.-% erreicht war. Die resultierende, klare Prepolymerlösung hatte einen Festgehalt von 52,8 Gew.-%, eine Viskosität bei 23 °C von 460 mPas, einen NCO-Gehalt von 5,3 Gew.-% und eine Farbzahl von 61 APHA.

### Polyisocyanat A3:

Zu einer Mischung aus 1190 g Desmodur^{®} IL 1451, 122 g Butylacetat und 0,75 g 2-Chlor-propionsäure wurde ein Gemisch aus 38 g eines Triethanolamin gestarteten Polyethertriols mit einem zahlenmittleren Molekulargewicht Mn von 1161 g/mol und einem Propylenoxidgehalt von 86,9 Gew.-% und 151 g eines Propylenglykol gestarteten Polyethers mit einem zahlenmittleren Molekulargewicht von Mn von 4007 g/mol, einem Propylenoxidgehalt von 85,2 Gew.-% und einem Ethylenoxidgehalt von 13,1 Gew.-% bei 80 °C zugetropft. Nach beendeter Zugabe wurde bei 80 °C weitergerührt, bis der theoretische NCO-Gehalt von 5,3 Gew.-% erreicht war. Die resultierende, klare Prepolymerlösung hatte einen Festgehalt von 52,5 Gew.-%, eine Viskosität bei 23 °C von 580 mPas, einen-NCO-Gehalt von 5,3 Gew.-% und eine Farbzahl von 63 APHA.

### Polyisocyanat A4:

Zu einer Mischung aus 1198 g Desmodur^{®} IL 1451, 118 g Butylacetat und 0,75 g 2-Chlor-propionsäure wurde ein Gemisch aus 46 g eines Triethanolamin gestarteten Polyethertriols mit einem zahlenmittleren Molekulargewicht Mn von 1161 g/mol und einem Propylenoxidgehalt von 86,9 Gew.-% und 138 g eines Propylenglykol gestarteten Polyethers mit einem zahlenmittleren Molekulargewicht von Mn von 4007 g/mol, einem Propylenoxidgehalt von 85,2 Gew.-% und einem Ethylenoxidgehalt von 13,1 Gew.-% bei 80 °C zugetropft. Nach beendeter Zugabe wurde bei 80 °C weitergerührt, bis der theoretische NCO-Gehalt von 5,3 Gew.-% erreicht war. Die resultierende, klare Prepolymerlösung hatte einen Festgehalt von 53,0 Gew.-%, eine Viskosität bei 23 °C von 719 mPas, einen NCO-Gehalt von 5,2 Gew.-% und eine Farbzahl von 79 APHA.

### Polyisocyanat A5:

Zu einer Mischung aus 1207 g Desmodur^{®} IL 1451, 114 g Butylacetat und 0,75 g 2-Chlor-propionsäure wurde ein Gemisch aus 54 g eines Triethanolamin gestarteten Polyethertriols mit einem zahlenmittleren Molekulargewicht Mn von 1161 g/mol und einem Propylenoxidgehalt von 86,9 Gew.-% und 126 g eines Propylenglykol gestarteten Polyethers mit einem zahlenmittleren Molekulargewicht von Mn von 4007 g/mol, einem Propylenoxidgehalt von 85,2 Gew.-% und einem Ethylenoxidgehalt von 13,1 Gew.-% bei 80 °C zugetropft. Nach beendeter Zugabe wurde bei 80 °C weitergerührt, bis der theoretische NCO-Gehalt von 5,3 Gew.-% erreicht war. Die resultierende, klare Prepolymerlösung hatte einen Festgehalt von 52,9 Gew.-%, eine Viskosität bei 23 °C von 769 mPas, einen NCO-Gehalt von 5,3 Gew.-% und eine Farbzahl von 75 APHA.

### Polyisocyanat B1:

Zu 2000 g Desmodur^{®} N 3600 werden 2000 g ^{®}Desmodur N 3400 getropft und 30 Minuten bei 60 °C gerührt. Es resultiert eine klare Polyisocyanatmischung mit einer Viskosität von 447 mPas, einem Isocyanatgehalt von 22,2 Gew.-% und einer Farbzahl von 1 APHA.

### Polyisocyanat B2:

Zu 1333 g Desmodur^{®} N 3600 werden 2667 g Desmodur^{®} N 3400 getropft und 30 Minuten bei 60 °C gerührt. Es resultiert eine klare Polyisocyanatmischung mit einer Viskosität von 285 mPas, einem Isocyanatgehalt von 21,9 Gew.-% und einer Farbzahl von 10 APHA.

### Polyisocyanat B3:

Zu 3467 g Desmodur^{®} N 3600 werden 1733 g Desmodur^{®} N 3400 getropft und 30 Minuten bei 60 °C gerührt. Es resultiert eine klare Polyisocyanatmischung mit einer Viskosität von 567 mPas, einem Isocyanatgehalt von 22,5 Gew.-% und einer Farbzahl von 16 APHA.

### Polyisocyanat 1 (erfindungsgemäß):

Mischung aus 62 Gew.-% Polyisocyanat A5 und 38 Gew.-% Desmodur^{®} N 3400. Es resultiert eine klare Polyisocyanatmischung mit einem Festkörpergehalt von 71,5 Gew.-%, einer Viskosität von 845 mPas, einem NCO-Gehalt von 11,6 Gew.-% und einer Farbzahl von 53 APHA.

### Polyisocyanat 2 (erfindungsgemäß):

Mischung aus 56 Gew.-% Polyisocyanat A5 und 44 Gew.-% Desmodur^{®} N 3600. Es resultiert eine klare Polyisocyanatmischung mit einem Festkörpergehalt von 73,1 Gew.-%, einer Viskosität von 1120 mPas, einem NCO-Gehalt von 13,1 Gew.-% und einer Farbzahl von 49 APHA.

### Polyisocyanat 3 (erfindungsgemäß) (Handmischung):

Mischung aus 60 Gew.-% Polyisocyanat A1 und 40 Gew.-% Desmodur^{®} XP 2580. Es resultiert eine klare Polyisocyanatmischung mit einem Festkörpergehalt von 71,2 Gew.-%, einer Viskosität von 500 mPas, einem NCO-Gehalt von 10,8 Gew.-% und einer Farbzahl von 77 APHA.

### Polyisocyanat 4 (erfindungsgemäß) (Handmischung):

Mischung aus 58 Gew.-% Polyisocyanat A2 und 42 Gew.-% Desmodur^{®} XP 2410. Es resultiert eine klare Polyisocyanatmischung mit einem Festkörpergehalt von 72,3 Gew.-%, einer Viskosität von 665 mPas, einem NCO-Gehalt von 12,7 Gew.-% und einer Farbzahl von 58 APHA.

### Polyisocyanat 5 (erfindungsgemäß) (Handmischung):

Mischung aus 61 Gew.-% Polyisocyanat A3 und 39 Gew.-% Polyisocyanat B2. Es resultiert eine klare Polyisocyanatmischung mit einem Festkörpergehalt von 70,6 Gew.-%, einer Viskosität von 597 mPas, einem NCO-Gehalt von 11,6 Gew.-% und einer Farbzahl von 53 APHA.

### Polyisocyanat 6 (erfindungsgemäß) (Handmischung):

Mischung aus 57 Gew.-% Polyisocyanat A5 und 43 Gew.-% Polyisocyanat B3. Es resultiert eine klare Polyisocyanatmischung mit einem Festkörpergehalt von 72,5 Gew.-%, einer Viskosität von 969 mPas, einem NCO-Gehalt von 12,4 Gew.-% und einer Farbzahl von 71 APHA.

### Polyisocyanat 7 (erfindungsgemäß) (Handmischung):

Mischung aus 60 Gew.-% Polyisocyanat A4 und 40 Gew.-% Polyisocyanat B1. Es resultiert eine klare Polyisocyanatmischung mit einem Festkörpergehalt von 71,9 Gew.-%, einer Viskosität von 614 mPas, einem NCO-Gehalt von 12,1 Gew.-% und einer Farbzahl von 136 APHA.

### Polyisocyanat 8 (erfindungsgemäß):

Zu einer Mischung aus 499 g Desmodur^{®} IL 1451, 380 g Desmodur^{®} N3400, 47 g Butylacetat und 0,31 g 2-Chlorpropionsäure wurde ein Gemisch aus 22 g eines Triethanolamin gestarteten Polyethertriols mit einem zahlenmittleren Molekulargewicht Mn von 1161 g/mol und einem Propylenoxidgehalt von 86,9 Gew.-% und 52 g eines Propylenglykol gestarteten Polyethers mit einem zahlenmittleren Molekulargewicht von Mn von 4007 g/mol, einem Propylenoxidgehalt von 85,2 Gew.-% und einem Ethylenoxidgehalt von 13,1 Gew.-% bei 80 °C zugetropft. Nach beendeter Zugabe wurde bei 80 °C weitergerührt, bis der theoretische NCO-Gehalt von 11,6 Gew.-% erreicht war. Die resultierende, klare Polyisocyanatmischung hatte einen Festgehalt von 71,1 Gew.-%, eine Viskosität bei 23 °C von 690 mPas, einen NCO-Gehalt von 11,1 Gew.-% und eine Farbzahl von 129 APHA.

### Polyisocyanat 9 (Vergleich)

Nachstellung des Polyisocyanats 1 der EP-A 1 582 543 und Einstellung der Mischung mit Butylacetat auf einen Festkörpergehalt von 50 Gew.-%. Es resultiert eine Polyisocyanatmischung mit einem Festgehalt von 50,3 Gew.-%, einer Viskosität von 238 mPas, einem NCO-Gehalt von 4,1 Gew.-% und einer Farbzahl von 88 APHA.

### Lacktechnische Untersuchungen

Die Polyisocyanate wurden als Decklacke nach folgenden Grundrezepturen formuliert:
Das jeweilige Polyisocyanat wurde mit Butylacetat auf eine Auslaufviskosität von ca. 20 s (DIN 4-mm Becher bei 23 °C, DIN 53211) eingestellt. Die erfindungsgemäßen Polyisocyanate, die neben aromatischen auch aliphatische Polyisocyanate enthalten, wurden zusätzlich mit 0,75 Gew.-% (bezogen auf Lieferform) Dimorpholinodiethylether versetzt.

Folgende Prüfungen wurden durchgeführt:
1. Die Stabilitäten wurden durch Beobachtung der Viskositätsentwicklung nach 1 Tag Lagerung bei Raumtemperatur und nach 15 Tagen Lagerung im geschlossenen Gefäß bei 50 °C ermittelt. Die Auslaufzeiten wurden nach DIN 53211 bestimmt. Die Stabilitäten wurden als ok bezeichnet, wenn das Verhältnis von Auslaufzeit nach Lagerung zu Auslaufzeit vor Lagerung < 2 war.
2. Die Pendelhärte des Decklacks nach König wurde nach DIN 53157 bestimmt.
3. Zur Ermittlung der Trocknungsgeschwindigkeit wurden die Sandtrocknung¹⁾, die Grifftrocknung²⁾ und die Durchtrocknung³⁾ von 240 µm dicken Nasslackfilmen auf Glasplatten in Minuten bestimmt.
   **Durchführung der Sandtrocknung:**
   Zur Bestimmung der Oberflächentrocknung werden vorsichtig Sandkörner auf die zu prüfende Lackschicht aufgebracht. Nach 1 Minute Belastung werden sie mit einem feinen Haarpinsel ohne Druck abgepinselt und die Lackschicht auf eventuell noch anhaftende Sandkörner visuell beurteilt.
   **Durchführung der Grifftrocknung:**
   Die fertigen Lacke werden auf Glasplatten mit der geforderten Naßfilm-Schichtdicke (240 µm) aufgezogen und bei R.T. getrocknet. In festgelegten Zeitabständen, die sich nach der erwartenden Endzeit richten, wird mit dem Daumen geprüft, ob die Oberfläche noch klebrig ist. Die Probe ist grifffesttrocken, wenn die Oberfläche nicht mehr klebrig ist.
   **Durchführung der Durchtrocknung:** Die fertigen Lacke werden auf Glasplatten mit der geforderten Naßfilm-Schichtdicke (240 µm) aufgezogen und bei R.T. getrocknet. In festgelegten Zeitabständen, die sich nach der erwartenden Endzeit richten, wird mit dem Daumen ein Druck von 2 - 3 kp (evtl. vorher auf einer Waage austesten) auf den Film ausgeübt. Der Zeitpunkt, an dem bei schräg auffallendem Licht kein Abdruck mehr zu sehen ist, gilt als Endpunkt der Bestimmung.
4. Zur Ermittlung der Lösemittelbeständigkeit wurde die Lackfilme nach 24 h und nach 7 Tagen mit einem mit folgenden Lösemitteln getränkten Wattebausch 1 min belastet: Aceton sowie einer 1:1-Mischung aus Butylacetat und Ethylacetat. Danach wird die Probe visuell und nach Kratzen mit dem Fingernagel beurteilt. Die Benotung 0 bedeutet dabei sehr schlecht (Lackfilm aufgelöst) die Benotung 5 bedeutet sehr gut (keine sichtbare Veränderung).
5. Die Kratzfestigkeit wurde wie folgt bestimmt: Nach festgelegten Zeiten wird der bei Raumtemperatur ausgehärtete Lackfilm mit dem Fingernagel angekratzt. Dazu legt man das Handgelenk so auf die Prüfplatte, dass der Fingernagel senkrecht auf der Lackfläche aufliegt. Man fährt unter leichtem Druck mit dem Fingernagel ruckartig über die Fläche hin und her (normalerweise 10 mal hin und her) und mustert visuell auf Kratzspuren ab. Die Benotung 0 bedeutet dabei sehr schlecht (Beschichtung völlig zerstört) die Benotung 5 bedeutet sehr gut (ohne sichtbare Veränderung).
6. Der Glanz nach Gardner wurde nach 24 h und nach 7 Tagen gemessen.
7. Die Vergilbungsneigung wurde wie folgt bestimmt: Es wird auf weißes Porzellan (200x100 mm) 180 µm Lack appliziert. Die gehärtete Probe wird hinter Glass gelagert (45° Winkel und Richtung Süden orientiert). Die Farbzahl (CIELAB, Byk Gardner Color Guide 45/0) wird vor der Lagerung und nach bestimmte Zeit gemessen. Als Standard / Referenz wird das Porzellan ohne Lack benutzt. ΔE zwischen den Proben und der Referenz wir gemessen.

### Prüfergebnisse:

| Lack auf Basis Polyisocyanat | | | **1** | **2** | **9 (Vergleich)** |
|---|---|---|---|---|---|
| Festgehalt [%] | | | 54,4 | 54,4 | 40,0 |
| Viskosität @ 23 °C (DIN 4 Becher) [s] | | 0 h | 20 | 20 | 19,5 |
| | | 24 h | 21 | 21 | 19,5 |
| | 15 d @ 50°C | | 29 | 26 | 21 |
| Pendelhärte nach König [s] | | 1 h | 42 | 35 | 34 |
| | | 2 h | 57 | 49 | 50 |
| | | 4 h | 87 | 77 | 83 |
| | | 6 h | 112 | 106 | 101 |
| | | 8 h | 136 | 140 | 116 |
| | | 24 h | 209 | 207 | 150 |
| | | 7 d | 210 | 214 | 161 |
| Sandtrocknung [min] | | | 14 | 17 | 15 |
| Grifftrocknung [min] | | | 18 | 23 | 19 |
| Durchtrocknung [min] | | | 26 | 30 | 25 |
| Kratzfestigkeit | | 24 h | 3 | 3 | 1-2 |
| | | 7 d | 5 | 5 | 3-4 |
| Lösemittelbeständigkeit^{*)} | 24 h | Aceton | 4/1 | 4/1 | 0/0 |
| | | BA/EA | 5/5 | 4-5 / 5 | 0 / 0 |
| | 7 d | Aceton | 4-5 / 4-5 | 4-5 / 4-5 | 0/0 |
| | | BA/EA | 5/5 | 5/5 | 4/1 |
| Glanz | nach 24 h | 20° | 87,5 | 85,8 | 86,8 |
| | | 60° | 96,1 | 95,1 | 95,9 |
| | nach 7 d | 20° | 86,1 | 83,8 | 81,6 |
| | | 60° | 93,5 | 93,8 | 91,7 |
| Vergilbung (ΔE) Außenlagerung | | 0 h | 1,81 | 1,78 | 2,46 |
| | | 14 d | 2,01 | 2,09 | 6,41 |
| | | 30 d | 2,28 | 2,43 | 10,40 |
| | | 60 d | 3,05 | 3,51 | 17,91 |
| | | 90 d | 3,69 | 4,25 | 21,64 |

| | | | | | |
|---|---|---|---|---|---|
| *) erster Wert visuell, zweiter Wert visuell nach Kratzen mit dem Fingernagel | | | | | |

### Diskussion der Prüfergebnisse:

Decklacke auf Basis der erfindungsgemäßen Polyisocyanate 1 und 2 weisen nach Einstellung auf eine Verarbeitungsviskosität von 20 s (DIN 4 mm Becher @ 23 °C) einen Festkörpergehalt von 54.4 Gew.-% auf, dagegen ist der Festkörpergehalt des Vergleichspolyisocyanats 9 mit 40,0 Gew.-% bei gleicher Viskosität viel geringer. Die Trocknungsgeschwindigkeit aller Lacke ist vergleichbar schnell, jedoch weisen die erfindungsgemäßen Lacke eine schnellere Härteentwicklung und eine höhere Endhärte auf. Die Kratzfestigkeit der erfindungsgemäßen Lacke ist besser als die des Vergleichslackes. Die Lösemittelbeständigkeit der erfindungsgemäßen Lacke ist, vor allem schon nach 24 Stunden, deutlich besser als die des Vergleichslackes. Der Glanz aller Lacke liegt auf ähnlich hohem Niveau, jedoch ist die Vergilbungsneigung der erfindungsgemäßen Lacke deutlich geringer als die des Vergleichslackes.

## Patentansprüche

1. Lösemittelhaltige Polyisocyanatmischungen mit einem Lösemittelanteil von < 50 Gew.-% bei einer Auslaufviskosität (23 °C) von 20 s, einem NCO-Gehalt von 7 bis 15 Gew.-%, einem Gehalt an monomerem TDI von weniger 0,2 Gew.-%, einem Gehalt an monomeren aliphatischen und oder cycloaliphatischen Isocyanaten von weniger als 0,2 Gew.-%, **dadurch gekennzeichnet, dass** sie bestehen aus:
A) Einer TDI-Komponente, enthaltend TDI-Isocyanuratpolyisocyanate,
B) Einer aliphatischen und/oder cycloaliphatischen Isocyanatkomponente, enthaltend aliphatische und/oder cycloaliphatischen Polyisocyanate,
und Umsetzungsprodukten wenigstens einer der Komponenten A) und B) mit
C) mindestens einem Polyetherpolyol mit einem zahlengemittelten Molekulargewicht von 500 bis 4000 g/mol, das mindestens 1 tertiäres Stickstoffatom enthält
und
D) gegebenenfalls mindestens einem Polyetherpolyol, das keine Stickstoffatome enthält.

2. Verfahren zur Herstellung der lösemittelhaltigen Polyisocyanatmischungen gemäß Anspruch 1, bei dem in Anwesenheit organischer Lösemittel Prepolymermischungen aus
A) einer TDI-Komponente, enthaltend TDI-Isocyanuratpolyisocyanate und
B) einer aliphatischen und/oder cycloaliphatischen Isocyanatkomponente, enthaltend aliphatische und/oder cycloaliphatische Polyisocyanate durch Umsetzung wenigsten einer der beiden Komponeten A) und/oder B) mit
C) mindestens einem Polyetherpolyol mit einem zahlengemittelten Molekulargewicht von 500 bis 4000 g/mol, das mindestens 1 tertiäres Stickstoffatom enthält und
D) gegebenenfalls mindestens einem Polyetherpolyol, das keine Stickstoffatome enthält,
hergestellt werden.

3. Verfahren zur Herstellung lösemittelhaltiger Polyisocyanatmischungen gemäß Anspruch 2, **dadurch gekennzeichnet, dass** es unter Mitverwendung von Stabilisatoren und Katalysatoren durchgeführt wird.

4. Verfahren zur Herstellung lösemittelhaltiger Polyisocyanatmischungen gemäß Anspruch 2, **dadurch gekennzeichnet, dass** die Verbindungen aus A) in Mengen von- 55 bis 95 Gew.-% und die Verbindungen aus B) in Mengen von 5 bis 45 Gew.-%, bezogen auf die Gesamtmenge von A) und B) eingesetzt werden.

5. Verwendung lösemittelhaltiger Polyisocyanatmischungen gemäß Anspruch 1 bei der Herstellung von Beschichtungen, Verklebungen und/oder Dichtungen.

6. Beschichtungen enthaltend
a) lösemittelhaltige Polyisocyanatmischungen gemäß Anspruch 1
b) Katalysatoren zur Beschleunigung der Reaktion der freien NCO-Gruppen mit Feuchtigkeit sowie
c) Hilfs- und Zusatzstoffe

7. Beschichtungen, Verklebungen und/oder Dichtungen, enthaltend lösemittelhaltige Polyisocyanatmischungen gemäß Anspruch 1.

8. Klebstoffe enthaltend lösemittelhaltige Polyisocyanatmischungen gemäß Anspruch 1.

9. Dichtstoffe enthaltend lösemittelhaltige Polyisocyanatmischungen gemäß Anspruch 1.

10. Mit Beschichtungen, enthaltend lösemittelhaltige Polyisocyanatmischungen gemäß Anspruch 1, beschichtete Substrate.

## Claims

1. Solvent-containing polyisocyanate mixtures with a solvent fraction of < 50% by weight for an efflux viscosity (23°C) of 20 s, an NCO content of 7% to 15% by weight, a monomeric TDI content of less than 0.2% by weight, a monomeric aliphatic and/or cycloaliphatic isocyanate content of less than 0.2% by weight, **characterized in that** they consist of:
A) a TDI component comprising TDI isocyanurate polyisocyanates,
B) an aliphatic and/or cycloaliphatic isocyanate component comprising aliphatic and/or cycloaliphatic polyisocyanates,
and reaction products of at least one of the components A) and B) with
C) at least one polyether polyol having a number-average molecular weight of 500 to 4000 g/mol and containing at least 1 tertiary nitrogen atom
and
D) optionally at least one polyether polyol containing no nitrogen atoms.

2. Process for preparing the solvent-containing polyisocyanate mixtures according to Claim 1, wherein, with organic solvents present, prepolymer mixtures are prepared from
A) a TDI component comprising TDI isocyanurate polyisocyanates and
B) an aliphatic and/or cycloaliphatic isocyanate component comprising aliphatic and/or cycloaliphatic polyisocyanates, by reaction of at least one of the two components A) and/or B) with
C) at least one polyether polyol having a number-average molecular weight of 500 to 4000 g/mol and containing at least 1 tertiary nitrogen atom and
D) optionally at least one polyether polyol containing no nitrogen atoms.

3. Process for preparing solvent-containing polyisocyanate mixtures according to Claim 2, **characterized in that** it is carried out with accompanying use of stabilizers and catalysts.

4. Process for preparing solvent-containing polyisocyanate mixtures according to Claim 2, **characterized in that** the compounds from A) are used in amounts of 55% to 95% by weight and the compounds from B) in amounts of 5% to 45% by weight, based on the total amount of A) and B).

5. Use of solvent-containing polyisocyanate mixtures according to Claim 1 in the production of coatings, adhesive bonds and/or seals.

6. Coatings comprising
a) solvent-containing polyisocyanate mixtures according to Claim 1,
b) catalysts for accelerating the reaction of the free NCO groups with moisture, and
c) auxiliaries and additives.

7. Coatings, adhesive bonds and/or seals comprising solvent-containing polyisocyanate mixtures according to Claim 1.

8. Adhesives comprising solvent-containing polyisocyanate mixtures according to Claim 1.

9. Sealants comprising solvent-containing polyisocyanate mixtures according to Claim 1.

10. Substrates coated with coatings comprising solvent-containing polyisocyanate mixtures according to Claim 1.

## Revendications

1. Mélanges de polyisocyanates contenant un solvant, ayant une teneur en solvant de < 50 % en poids pour une viscosité à l'écoulement (23 °C) de 20 s, une teneur en NCO de 7 à 15 % en poids, une teneur en TDI monomère de moins de 0,2 % en poids, une teneur en isocyanates monomères aliphatiques et/ou cycloaliphatiques de moins de 0,2 % en poids, **caractérisés en ce qu'**ils sont constitués :
A) d'un composant TDI, contenant des TDI-isocyanurate-polyisocyanates,
B) d'un composant isocyanate aliphatique et/ou cycloaliphatique, contenant des polyisocyanates aliphatiques et/ou cycloaliphatiques,
et de produits de réaction d'au moins l'un des composants A) et B) avec
C) au moins un polyétherpolyol ayant une masse moléculaire moyenne en nombre de 500 à 4 000 g/mole, qui contient au moins 1 atome d'azote tertiaire
et
D) éventuellement au moins un polyétherpolyol qui ne contient pas d'atomes d'azote.

2. Procédé pour la préparation de mélanges de polyisocyanates contenant un solvant selon la revendication 1, dans lequel on prépare en présence de solvants organiques des mélanges de prépolymères à partir
A) d'un composant TDI, contenant des TDI-isocyanurate-polyisocyanates et
B) d'un composant isocyanate aliphatique et/ou cycloaliphatique, contenant des polyisocyanates aliphatiques et/ou cycloaliphatiques, par mise en réaction d'au moins l'un des deux composants A) et/ou B) avec
C) au moins un polyétherpolyol ayant une masse moléculaire moyenne en nombre de 500 à 4 000 g/mole, qui contient au moins un atome d'azote tertiaire
et
D) éventuellement au moins un polyétherpolyol qui ne contient pas d'atomes d'azote.

3. Procédé pour la préparation de mélanges de polyisocyanates contenant un solvant selon la revendication 2, **caractérisé en ce qu'**on l'effectue en utilisant en même temps des stabilisants et des catalyseurs.

4. Procédé pour la préparation de mélanges de polyisocyanates contenant un solvant selon la revendication 2, **caractérisé en ce qu'**on utilise les composés de A) en quantités de 55 à 95 % en poids et les composés de B) en quantités de 5 à 45 % en poids, par rapport à la quantité totale de A) et B).

5. Utilisation de mélanges de polyisocyanates contenant un solvant selon la revendication 1, dans la production de revêtements, de collages et/ou d'étanchéifications.

6. Revêtements contenant
a) des mélanges de polyisocyanates contenant un solvant selon la revendication 1
b) des catalyseurs destinés à accélérer la réaction des groupes NCO libres avec l'humidité ainsi que
c) des additifs et adjuvants.

7. Revêtements, collages et/ou étanchéifications, contenant des mélanges de polyisocyanates contenant un solvant selon la revendication 1.

8. Adhésifs contenant des mélanges de polyisocyanates contenant un solvant selon la revendication 1.

9. Matières d'étanchéité contenant des mélanges de polyisocyanates contenant un solvant selon la revendication 1.

10. Supports revêtus avec des mélanges de polyisocyanates contenant un solvant selon la revendication 1.
